# EUROPÄISCHE PATENTSCHRIFT

(11) **EP 1 529 819 B1**
(45) Veröffentlichungstag und Bekanntmachung des Hinweises auf die Patenterteilung: **22.02.2006**
(21) Anmeldenummer: 04020594.0
(22) Anmeldetag: 31.08.2004
(51) Int. Cl.: C09C 1/58, C09D 17/00, C09D 11/02

(54) **Russgranulate**
Carbon black granulate
Granulé à base de noir de carbone

(30) Priorität: 28.10.2003 DE 10350188
(43) Veröffentlichungstag der Anmeldung: 11.05.2005
(73) Patentinhaber: Degussa AG, 40474 Düsseldorf (DE)
(72) Erfinder: Zoch, Heinz F., Dr., 63477 Maintal (DE); Hornick, Norbert, 63825 Schöllkrippen (DE); Karl, Alfons, Dr., 63584 Gründau (DE); Teike, Silke, 50189 Elsdorf (DE)

(56) Entgegenhaltungen:
- EP-A- 0 807 669
- EP-A- 1 293 543
- US-A- 5 872 177

## Beschreibung

Die Erfindung betrifft Rußgranulate, ein Verfahren zu deren Herstellung sowie deren Verwendung.

Bei der Verarbeitung von Rußen werden vorzugsweise granulierte Produkte eingesetzt, die häufig als Rußgranulat, Perlruß oder pelletierter Ruß bezeichnet werden. Abhängig von der Struktur und der Oberfläche der Ruße ist die Granulation unterschiedlich zu handhaben. So agglomerieren Ruße mit niedriger Struktur leichter als Ruße mit hoher Struktur.

Aus US 5,981,625 sind Tinten bekannt, enthaltend einen

Farbstoff mit einer Partikelgröße von 0,01 µm bis 25 µm, einem Kohlenwasserstoffharz, einem oxidierten Polyethylen und einem Harz als Bindemittel.

Ferner ist aus US 4,397,652 ein Verfahren zur Herstellung von Tinten bekannt, das ein Adhesiv, ausgewählt aus der Gruppe bestehend aus Sorbitol, hydrierter Dextrose, Glukose, Lactose, Neopentylglykol, Mannitol, Mannose und Polyethylenglycol und ein Staubbindemittel enthält.

Aus WO 96/21698 ist eine Rußzusammensetzung bekannt, enthaltend Ruß und ein Bindemittel, ausgewählt aus der Gruppe ethoxylierte Ester und Polyether.

Die bekannten Rußperlen haben die Nachteile, dass die Russperlen sich schwer dispergieren lassen und eingearbeitet in Druckfarben einen niedrigen Glanz haben. Desweiteren besitzen solche Druckfarben schlechte Fließeigenschaften, eine hohe Wasseraufnahme und ein schlechtes Freilaufverhalten auf der Druckplatte.

Aufgabe der vorliegenden Erfindung ist es, Rußgranulate zur Verfügung zu stellen, die eingearbeitet in Druckfarben, einen guten Dispergierzustand, einen hohen Glanz, gute Fließeigenschaften, eine niedrige Wasseraufnahme und ein gutes Freilaufverhalten der Druckplatte besitzen.

Gegenstand der Erfindung sind Rußgranulate, welche dadurch gekennzeichnet sind, daß sie ein Triester des Sorbitans enthalten.

Die Rußgranulate können perlförmig sein.

Als Triester des Sorbitans können alle Triester von gesättigten, ungesättigten oder mehrfach ungesättigten Carbonsäuren eingesetzt werden. Die Carbonsäuren können verzweigt oder unverzweigt sein. Vorzugsweise können Sorbitantrioleat, Sorbitantrilaureat, Sorbitantristearat, Sorbitantripalmeat oder Sorbitantriricinoleat eingesetzt werden.

Die Rußgranulate können 1 bis 15 Gew.-%, bevorzugt 3 bis 7 Gew.-%, Triester des Sorbitans, bezogen auf die Rußgranulate, enthalten.

Die Rußgranulate können eine BET-Oberfläche von 10 bis 300 m²/g, vorzugsweise von 45 bis 110 m²/g, haben.

Ein weiterer Gegenstand der Erfindung ist ein Verfahren zur Herstellung von Rußgranulaten, welches dadurch gekennzeichnet ist, dass man einen Pulverruß oder geperlten Ruß mit einem Triester des Sorbitans granuliert.

Die Granulation kann in einem Ringschichtmischgranulator, einer Perlmaschine oder einer Perltrommel erfolgen.

Als geperlten Ruß kann man naß- oder trockengeperlten Ruß einsetzen.

Die Rußgranulate können nach der Granulierung getrocknet werden. Die Trocknertemperatur kann zwischen 100° und 250°C, vorzugsweise zwischen 150° und 200°C, betragen. Die Temperatur der Rußgranulate beim Trockneraustritt kann zwischen 30° und 100°C, vorzugsweise zwischen 40° und 70°C, betragen.

Die erfindungsgemäßen Rußgranulate können nachgeperlt werden.

Mit dem erfindungsgemäßen Verfahren können prinzipiell alle Rußtypen granuliert werden. Es können Furnaceruße, Flammruße, Gasruße, Channelruß, Thermalruß, Acetylenruß, Plasmaruß, Inversionsruß, bekannt aus DE 195 21 565, Sihaltige Ruße, bekannt aus WO 98/45361 oder DE 19613796, oder metallhaltige Ruße, bekannt aus WO 98/42778, Lichtbogenruße und kohlenstoffhaltige Materialien, die Nebenprodukte chemischer Produktionsprozesse sind, verwendet werden. Vorzugsweise können Ruße mit BET-Oberflächen zwischen 10 und 300 m²/g verwendet werden.

Als Ausgangsruß können beispielsweise Printex 25, Printex 275, Printex 30, Printex 300, Printex 35 und Printex 45 der Firma Degussa AG eingesetzt werden.

Der Triester des Sorbitans kann gelöst sein, beispielsweise in Mineralölen oder vegetabilen Ölen, vorzugsweise in Ölen, die in Druckfarben verwendet werden können.

Der Triester des Sorbitans kann als 10 und 90 Gew.-%-ige Lösung eingesetzt werden.

Dem Triester des Sorbitans kann ein weiteres Bindemittel zugesetzt sein. Beispielsweise kann als zusätzliches Bindemittel Harze oder Wachse, sowie zahlreiche andere Stoffe alleine oder in Kombination miteinander, zugesetzt werden.

In einer bevorzugten Ausführungsform kann dem Triester des Sorbitans kein weiteres Bindemittel zugesetzt sein.

Die erfindungsgemäßen Rußgranulate können in Polymermischungen, wie beispielsweise Kautschuk und Kunststoffe, Lacken, Farben, insbesondere Druckfarben, Pigmenten und den zahlreichen weiteren Verwendungsformen von Ruß verwendet werden. In einer bevorzugten Verwendungsform können die erfindungsgemäßen Rußgranulate in Öl basierenden Offsetdruckfarben eingesetzt werden.

Ein weiterer Gegenstand der Erfindung sind Druckfarben, welche dadurch gekennzeichnet sind, dass sie die erfindungsgemäßen Rußgranulate enthalten.

Die Druckfarben können übliche Bestandteile, wie beispielsweise Bindemittel, Löse- und Verdünnungsmittel sowie andere Hilfstoffe enthalten.

Die Druckfarben können 5 bis 45 Gew.-%, bevorzugt 10 bis 25 Gew.-%, erfindungsgemäße Rußgranulate enthalten.

Die Druckfarben können hergestellt werden durch Vormischen der erfindungsgemäßen Rußgranulate mit Druckfarbenbindemitteln und anschließendem Dispergieren und Vermahlen.

Die erfindungsgemäßen Druckfarben können im Offset-Druck verwendet werden.

Die erfindungsgemäßen Rußgranulate haben den Vorteil, dass sie, eingearbeitet in Druckfarben, einen guten Dispergierzustand, einen hohen Glanz, ein gutes Fließverhalten, eine niedrige Wasseraufnahme und ein gutes Freilaufverhalten der Druckplatte besitzen.

### Beispiel 1-3:

### Herstellung der Rußgranulate

Zur Herstellung der erfindungsgemäßen Rußgranulate wird der Ausgangsruß mittels einer gravimetrischen Pulverdosierung dem beheizten Ringschicht-Mischgranulator (RMG) kontinuierlich zugeführt. Das Sorbitantrioleat wird gegebenenfalls aufgeheizt, um es besser pumpen zu können und um auch eine bessere Zerstäubung zu erreichen. Über einen Zugabestutzen, der 12,5 cm von der Mitte des Rußeinfüllstutzen entfernt ist, wird das Sorbitantrioleat mittels Zweistoffzerstäubung mit Luft eingedüst. Das aus dem Ringschicht-Mischgranulator ausgetragene, zum Teil granulierte Produkt wird zur Abrundung der Granulate und zur weiteren Verminderung des Feinstanteils in einer Granulationstrommel nachgeperlt. Als Ausgangsruße werden in Beispiel 1 Printex 25 (Px25), in Beispiel 2 Printex 35 (Px35) und in Beispiel 3 Printex 45 (Px45) eingesetzt. In allen drei Beispielen wird als Triester des Sorbitans Sorbitantrioleat (STO) genutzt. Die Versuchsbedingungen sind in Tabelle 1 beschrieben.

**Tabelle 1**

| | Beispiel 1 | Beispiel 2 | Beispiel 3 |
|---|---|---|---|
| Einsatzruß | Px25 | Px35 | Px45 |
| Drehzahl RMG [upm] | 260 | 320 | 260 |
| Neigung RMG [°] | 10 | 10 | 10 |
| Temperatur RMG [°C] | 110 | 50 | 110 |
| Triester des Sorbitans | STO | STO | STO |
| Menge Triester des Sorbitans [kg/h] | 1,56 | 1,04 | 1,56 |
| Temperatur [°C] | 100 | 40 | 100 |
| Nachgranulation | | | |
| Drehzahl [upm] | 20 | 20 | 20 |
| Dauer [h] | 2 | 1 | 2 |

Die analytischen Daten der Rußperlen werden nach folgenden Normen bestimmt:

| | |
|---|---|
| BET-Oberfläche | ASTM 6556-01a, |
| Feinstanteil: | ASTM D-1508-01 |
| Flüchtige 950 °C | DIN 53552 |
| Perlabrieb | DIN 53583 |
| Schüttdichte | DIN 53600 |

In Tabelle 2 sind die analytischen Daten der Beispiele 1-3 aufgeführt.

**Tabelle 2**

| | Beispiel 1 | Beispiel 2 | Beispiel 3 |
|---|---|---|---|
| BET [m²/g] | 38, 1 | 41,0 | 63,5 |
| Schüttdichte [g/l] | 472 | 520 | 408 |
| Flüchtige 950°C [%] | 4,0 | 4,8 | 3,6 |
| Feinstanteil [%] | 5,9 | 13,7 | 7,6 |
| Perlabrieb [%] | 1,2 | 1,3 | 5,5 |

### Vergleichsbeispiel 4-6

Als Vergleichsbeispiele werden die gleichen Ausgangsruße wie in Beispiel 1-3, jedoch ohne Zugabe von Additiv, granuliert.

Die Versuchsbedingungen sind in Tabelle 3 beschrieben.

**Tabelle 3**

| | Beispiel 4 | Beispiel 5 | Beispiel 6 |
|---|---|---|---|
| Einsatzruß | Px25 | Px35 | Px45 |
| Drehzahl RMG [upm] | 260 | 300 | 260 |
| Neigung RMG [°] | 10 | 10 | 10 |
| Temperatur RMG [°C] | 110 | 110 | 110 |
| Triester des Sorbitans | kein | kein | kein |
| | | | |
| Nachgranulation | | | |
| Drehzahl [upm] | 20 | 20 | 20 |
| Dauer [h] | 2,5 | 2,5 | 2,5 |

In Tabelle 4 sind die analytischen Daten der Vergleichsbeispiele 4-6 aufgeführt.

**Tabelle 4**

| | Beispiel 4 | Beispiel 5 | Beispiel 6 |
|---|---|---|---|
| BET [m²/gl | 48,5 | 60,0 | 88,5 |
| Schüttdichte [g/l] | 408 | 436 | 300 |
| Flüchtige 950°C [%] | 0,8 | 0,5 | 0,8 |
| Feinstanteil [%] | 3,4 | 2,2 | 1,8 |
| Perlabrieb [%] | 5,6 | 9,3 | 2,1 |

Die erfindungsgemäßen Rußgranulate (Beispiel 1-3) zeigen gegenüber den Vergleichsbeispielen 4-6 eine höhere Schüttdichte.

### Beispiel 7-9

Für die Beispiele 7-9 wird das Additiv auf trockengeperltem Ruß aufgebracht. Dazu wird trockengeperlter Ruß aus den Beispielen 4-6 in der Granuliertrommel vorgelegt. Das Sorbitantrioleat wird auf 80 °C aufgeheizt, um es besser pumpen zu können und um auch eine bessere Zerstäubung zu erreichen. Bei sich drehender Trommel wird das Sorbitantrioleat mittels Zweistoffzerstäubung mit Luft auf das Rußbett aufgesprüht. Nach beendeter Zugabe lässt man die Trommel noch weitere 10 min laufen.
Die Versuchsbedingungen sind in Tabelle 5 beschrieben.

**Tabelle 5**

| | Beispiel 7 | Beispiel 8 | Beispiel 9 |
|---|---|---|---|
| Einsatzruß | Px25 | Px35 | Px45 |
| Menge [kg] | 1, 6 | 1,6 | 1,6 |
| Triester des Sorbitans | STO | STO | STO |
| Menge Triester des Sorbitans [g] | 160 | 160 | 160 |
| Temperatur [°C] | 80 | 80 | 80 |
| Zerstäuberluft [Nm³/h] | 2 | 2 | 2 |
| Drehzahl [upm] | 20 | 20 | 20 |
| Nachgranulationszeit [min] | 10 | 10 | 10 |

In Tabelle 6 sind die analytischen Daten der Vergleichsbeispiele 7-9 aufgeführt.

**Tabelle 6**

| | Beispiel 7 | Beispiel 8 | Beispiel 9 |
|---|---|---|---|
| BET [m²/g] | 32,6 | 36,9 | 54,7 |
| Flüchtige 950°C [%] | 7,4 | 6,8 | 6,8 |
| Feinstanteil [%] | 1,5 | 3,5 | 1,4 |
| Perlabrieb 20 min[%] | 1,1 | 2,5 | 0,8 |

### Beispiel 10-12

### Offset Druckfarbe:

Unter einem Dissolver werden folgende Bestandteile gemischt:

| | |
|---|---|
| 12,8 % | ER-Harz 125 |
| 12,0 % | Necires LF 220/130 |
| 10,4 % | Albertol KP 172 |
| 10,4 % | Setalin V402 |
| 0,4 % | Cycloxim FF |
| 26,0 % | Öl PKW F 4/7 |
| 8,0 % | Öl PKW F 6/9 |

ER-Harz 125 ist eine Kohlenwasserstoff-Verbindung der Firma American Gilsonite Company USA (Lieferant Worlee Chemie GmbH Hamburg). Necires LF 220/130 ist ein Kohlenwasserstoffharz der Firma Nevcin Polymers B.V.

Holland. Albertol KP 172 ist ein Phenolharz modifiziertes Kolophoniumharz der Firma Solutia Germany GmbH&Co.KG Deutschland. Setalin V402 ist ein Alkydharz der Firma Akzo Nobel Resins Holland. Cycloxim FF ist ein Cyclohexanonoxim der Firma Acima AG Schweiz. Öl PKW F 4/7 ist ein säurebehandeltes Erdöldestillat der Firma Haltermann Products Hamburg. Öl PKW F 6/9 ist ein säurebehandeltes Erdöldestillat der Firma Haltermann Products Hamburg.

Nachdem die Komponenten innig vermischt sind wird noch 20,0 % Ruß zugegeben. Nach 15 Minuten Vordispergierung unter dem Dissolver (Getzmann) wird die Mischung dann in einer Mühle (Netzsch Attritor) so lange mit 3 mm Stahlkugeln vermahlen, bis die Grindometer Feinheit unter 5 µm liegt. Die in den Druckfarben verwendeten Ruße sind in Tabelle 7 aufgeführt.

**Tabelle 7**

| Druckfarben : | Beispiel 10 | Beispiel 11 | Beispiel 12 |
|---|---|---|---|
| Ruß aus | Beispiel 7 | Beispiel 8 | Beispiel 9 |

Von der Druckfarbe wird die Viskosität, Fließgrenze und das Fließverhalten bestimmt (Tabelle 8).

**Tabelle 8**

| Druckfarben: | Beispiel 10 | Beispiel 11 | Beispiel 12 |
|---|---|---|---|
| Viskosität [Pa s] | 10,3 | 14,3 | 16,2 |
| Fließgrenze [Pa] | 121 | 67 | 93 |
| Fließen 90° 5 min [mm] | 201 | 152 | 130 |

Mit einem Prüfbau Andruckgerät wird die Druckfarbe nach Entlüften über eine Dreiwalze auf Papier angedruckt. Die Farbauflage beträgt 1,5 g/m² auf APCO Papier. Am getrockneten Druck wird 24 h später die optische Dichte (Density), der Glanz und Gelbwert b* nach CieLab bestimmt (Tabelle 9).

**Tabelle 9**

| Druckfarben: | Beispiel 10 | Beispiel 11 | Beispiel 12 |
|---|---|---|---|
| Density | 2,04 | 2,10 | 2,19 |
| Glanz 60° | 91 | 92 | 96 |
| b* Wert | 0,07 | 0,13 | 0,28 |

### Vergleichsbeispiel 13-15

Als Vergleich werden die Rußgranulate nach Beispiel 4-6 ebenfalls in Druckfarben analog zu Beispiel 10-12 eingesetzt und diese untersucht (Tabelle 10).

**Tabelle 10**

| Druckfarben: | Beispiel 13 | Beispiel 14 | Beispiel 15 |
|---|---|---|---|
| Ruß aus | Beispiel 4 | Beispiel 5 | Beispiel 6 |

Von der Druckfarbe wird die Viskosität, Fließgrenze und das Fließverhalten bestimmt (Tabelle 11).

**Tabelle 11**

| Druckfarben: | Beispiel 13 | Beispiel 14 | Beispiel 15 |
|---|---|---|---|
| Viskosität [Pa s] | 17, 8 | 17,6 | 22,3 |
| Fließgrenze [Pa] | 111 | 99 | 121 |
| Fließen 90° 5 min [mm] | 137 | 136 | 117 |

Mit einem Prüfbau Andruckgerät wird die Druckfarbe nach Entlüften über eine Dreiwalze auf Papier angedruckt. Die Farbauflage beträgt 1,5 g/m² auf APCO Papier. Am getrockneten Druck wird 24 h später die optische Dichte (Density), der Glanz und Gelbwert b* nach CieLab bestimmt (Tabelle 12).

**Tabelle 12**

| Druckfarben: | Beispiel 13 | Beispiel 14 | Beispiel 15 |
|---|---|---|---|
| Density | 2,04 | 2,08 | 2,19 |
| Glanz 60° | 88 | 87 | 88 |
| b* Wert | -0,50 | -0,22 | -0,22 |

Die Druckfarben (Beispiel 10-12) mit den erfindungsgemäßen Rußgranulaten zeigen eine verbesserte, niedrigere Viskosität, ein besseres Fließen und einen höheren Glanz als die Druckfarben (Beispiel 13-15) mit den Vergleichsbeispielen.

### Beispiel 16

Analog zu den Beispielen 7-9 wird als Ausgangsruß Printex 275 (Px275, Furnaceruß mit BET-Oberfläche von 53,3 m²/g) verwendet und mit Sorbitantrioleat ein granulierter Ruß hergestellt (Tabelle 13).

**Tabelle 13**

| Versuchsbedingungen: | Beispiel 16 |
|---|---|
| Einsatzruß | Px275 |
| Menge [kg] | 1,6 |
| Additiv | STO |
| Menge [g] | 160 |
| Temperatur [°C] | 80 |
| Zerstäuberluft [Nm³/h] | 2 |
| Drehzahl [upm] | 20 |
| Nachgranulationszeit [min] | 10 |

In Tabelle 14 sind die analytischen Daten des Beispieles 16 aufgeführt.

**Tabelle 14**

| | Beispiel 16 |
|---|---|
| Flüchtige 950°C [%] | 7,0 |
| Gesamtperlhärte [kg] | 5 |
| Schüttdichte [g/l] | 603 |

### Beispiel 17-18

Entsprechend den Beispielen 10-12 wird der mit Sorbitantrioleat granulierte Printex 275 aus Beispiel 16 und normal trockengeperlte Ausgangsruß Printex 275 in Druckfarben eingearbeitet (Tabelle 15).

**Tabelle 15**

| Druckfarben: | Beispiel 17 | Beispiel 18 |
|---|---|---|
| Ruß aus | Beispiel 16 | Px 275 |

Am Tack-O-Scope wird das Verhalten gegenüber Wasser untersucht (Tabelle 16).

**Tabelle 16**

| Druckfarben: | Beispiel 17 | Beispiel 18 |
|---|---|---|
| Tackwert vorher | 160 | 160 |
| Tackwert Wasser | 10 | 10 |
| Tackwert nachher | 115-125 | 95-110 |

Die Druckfarbe (Beispiel 17) mit dem erfindungsgemäßen Rußgranulat zeigt einen höheren Tackwert nach Wasserkontakt als die Druckfarbe (Beispiel 18) mit dem Vergleichsruß.

### Beispiel 19-20

Nach Beispiel 10-12 werden zwei Druckfarben mit handelsüblichen Printex 35 hergestellt. Bei der Herstellung wird 5% Sorbitantrioleat (Beispiel 19) und 5% Sorbitanmonooleat (Beispiel 20), bezogen auf Ruß, eingesetzt. An beiden Farben wird das Verhalten gegenüber Wasser am Tack-O-Scope untersucht (Tabelle 17).

**Tabelle 17**

| Druckfarben: | Beispiel 19 | Beispiel 20 |
|---|---|---|
| Tackwert vorher | 138 | 120 |
| Tackwert Wasser | 13 | 15 |
| Tackwert nachher | 105 | 90 |
| Antriebswalze | läuft frei | läuft schlecht frei |
| Wasseraufnahme | gut (niedrig) | schlecht (hoch) |

Die Druckfarbe (Beispiel 19) mit dem erfindungsgemäßen Rußgranulat zeigt einen höheren Tackwert, der auch nach Wasserkontakt wieder höher ist, sowie eine niedrigere Wasseraufnahme und ein besseres Freilaufverhalten.

## Patentansprüche

1. Rußgranulate, **dadurch gekennzeichnet, daß** sie ein Triester des Sorbitans enthalten.

2. Rußgranulate nach Anspruch 1, **dadurch gekennzeichnet, daß** der Triester des Sorbitans Triester von gesättigten, ungesättigten oder mehrfach ungesättigten Carbonsäuren sind.

3. Rußgranulate nach Anspruch 1, **dadurch gekennzeichnet, daß** der Triester des Sorbitans Sorbitantrioleat, Sorbitantrilaureat, Sorbitantristearat, Sorbitantripalmeat oder Sorbitantriricinoleat ist.

4. Verfahren zur Herstellung der Rußgranulate nach Anspruch 1, **dadurch gekennzeichnet, dass** man einen Pulverruß oder geperlten Ruß mit einem Triester des Sorbitans granuliert.

5. Verfahren zur Herstellung der Rußgranulate nach Anspruch 4, **dadurch gekennzeichnet, dass** man Ruß mit BET-Oberflächen zwischen 10 und 300 m²/g einsetzt.

6. Verfahren zur Herstellung der Rußgranulate nach Anspruch 4, **dadurch gekennzeichnet, dass** man als Triester des Sorbitans Sorbitantrioleat, Sorbitantrilaureat, Sorbitantristearat, Sorbitantripalmeat oder Sorbitantriricinoleat einsetzt.

7. Verfahren zur Herstellung der Rußgranulate nach Anspruch 4, **dadurch gekennzeichnet, dass** man die Granulation in einer Perlmaschine, Ringschichtmischgranulator oder Perltrommel durchführt.

8. Verwendung der Rußgranulate nach Anspruch 1 in Polymermischungen, Lacken, Farben und Pigmenten.

9. Druckfarben, **dadurch gekennzeichnet, dass** sie die Rußgranulate nach Anspruch 1 enthalten.

## Claims

1. Carbon black granules, **characterised in that** they contain a sorbitan triester.

2. Carbon black granules according to claim 1, **characterised in that** the sorbitan triester is a triester of saturated, unsaturated or polyunsaturated carboxylic acids.

3. Carbon black granules according to claim 1, **characterised in that** the sorbitan triester is sorbitan trioleate, sorbitan trilaureate, sorbitan tristearate, sorbitan tripalmeate or sorbitan triricinoleate.

4. Process for the production of carbon black granules according to claim 1, **characterised in that** a powdered carbon black or beaded carbon black is granulated with a sorbitan triester.

5. Process for the production of carbon black granules according to claim 4, **characterised in that** carbon black with BET surface areas of between 10 and 300 m²/g is used.

6. Process for the production of carbon black granules according to claim 4, **characterised in that** sorbitan trioleate, sorbitan trilaureate, sorbitan tristearate, sorbitan tripalmeate or sorbitan triricinoleate is used as the sorbitan triester.

7. Process for the production of carbon black granules according to claim 4, **characterised in that** the granulation is performed in a bead machine, rapid mixer granulator or bead drum.

8. Use of the carbon black granules according to claim 1 in polymer blends, lacquers, inks and pigments.

9. Printing inks, **characterised in that** they contain the carbon black granules according to claim 1.

## Revendications

1. Granulés à base de noir de carbone,
**caractérisés en ce qu'**
ils contiennent un triester du sorbitane.

2. Granulés à base de noir de carbone selon la revendication 1,
**caractérisés en ce que**
le triester du sorbitane est un triester d'acides carboxyliques saturés, insaturés ou plusieurs fois insaturés.

3. Granulés à base de noir de carbone selon la revendication 1,
**caractérisés en ce que**
le triester du sorbitane est du trioléate de sorbitane, du trilauréate de sorbitane, du tristéarate de sorbitane, du tripalmitate de sorbitane ou du triricinoléate de sorbitane.

4. Procédé de fabrication de granulés à base de noir de carbone selon la revendication 1,
**caractérisé en ce qu'**
on forme des granulés à partir de noir de carbone en poudre ou de noir de carbone perlé avec un triester du sorbitane.

5. Procédé de fabrication de granulés à base de noir de carbone selon la revendication 4,
**caractérisé en ce qu'**
on utilise du noir de carbone avec des surfaces BET comprises entre 10 et 300 m²/g.

6. Procédé de fabrication de granulés à base de noir de carbone selon la revendication 4,
**caractérisé en ce qu'**
comme triester du sorbitane on utilise du trioléate de sorbitane, du trilauréate de sorbitane, du tristéarate de sorbitane, du tripalmitate de sorbitane ou du triricinoléate de sorbitane.

7. Procédé de fabrication de granulés à base de noir de carbone selon la revendication 4,
**caractérisé en ce qu'**
on réalise la granulation dans une machine à perler, dans un granulateur à mélange stratifié annulaire ou dans une cuve de perlage.

8. Utilisation des granulés à base de noir de carbone selon la revendication 1 dans des mélanges polymères, des vernis, des peintures ou des pigments.

9. Encres d'imprimerie,
**caractérisées en ce qu'**
elles contiennent les granulés à base de noir de carbone selon la revendication 1.
